# EUROPÄISCHE PATENTSCHRIFT

(11) **EP 1 387 971 B1**
(45) Veröffentlichungstag und Bekanntmachung des Hinweises auf die Patenterteilung: **05.10.2005**
(21) Anmeldenummer: 02742942.2
(22) Anmeldetag: 05.05.2002
(51) Int. Cl.: F16K 3/02

(54) **SCHIEBERVENTIL**
SLIDING VALVE
VANNE A TIROIR

(30) Priorität: 08.05.2001 DE 20107793 U
(43) Veröffentlichungstag der Anmeldung: 11.02.2004
(73) Patentinhaber: EVAC GmbH, 22880 Wedel (DE)
(72) Erfinder: BOTH, Detlev, 22880 Wedel (DE)
(74) Vertreter: Glaeser, Joachim
(86) Internationale Anmeldenummer: PCT/EP2002/004934
(87) Internationale Veröffentlichungsnummer: WO 2002/090804

(56) Entgegenhaltungen:
- DE-A- 4 127 240
- GB-A- 2 321 690
- US-A- 3 170 670
- US-A- 5 464 035

## Beschreibung

Die Erfindung bezieht sich auf ein Schieberventil für eine Rohrleitung für den Durchgang von Flüssigkeit, Schlamm oder Fäkalien, aufweisend ein Gehäuse mit einem Durchbruch für die Flüssigkeit, den Schlamm oder die Fäkalien, eine druckluftbetätigte Kolben-Zylinder-Anordnung für den gesteuerten Antrieb des Schiebers zwischen einer geöffneten und einer geschlossenen Lage zwecks Öffnung bzw. Sperrung des Durchgangs der Rohrleitung, wobei der Schieber in einem den Schieber umgebenden Gehäuse bewegbar geführt ist; und das Gehäuse über eine Leitung derart mit Druckluft versorgt werden kann, dass bei Arbeitsbewegungen des Schiebers das Gehäuse unter Luftüberdruck steht, um den Übergang von Verunreinigungen aus dem Durchgang der Rohrleitung in das Gehäuse zu verhindern.

Ein derartiges Schieberventil ist bekannt (GB/A/2 321 690). Um das Gehäuse unter Druck zu setzen, ist eine Leitung vorgesehen, die ihrerseits mit einer Druckquelle verbunden ist, die ein Druckmittel abgibt, das unter einem 0,5 bar höheren Druck als das geförderte Medium steht.

Beim Einsatz von Ventilen, bei denen das Gehäuse nicht unter Luftüberdruck gesetzt wird, besteht immer die Gefahr, dass der Schieber und damit auch Teile des Schiebergehäuses durch das Medium verunreinigt werden, das durch den Durchgang hindurchströmt bzw. durch die Sperrstellung des Schiebers abgesperrt wird. Die Folge ist, dass derartige Schieberventile von Zeit zu Zeit, je nach Einsatzzweck, auseinandergebaut und gereinigt werden müssen.

Besonders problematisch ist diese Situation bei flüssigen Lebensmitteln und den möglicherweise entstehenden gesundheitsgefährdenden Zersetzungsprodukten, die sich in dem Schiebergehäuse ansammeln können. Aber auch bei Fäkalienleitungen bedingen Ansammlungen im Gehäuse häufige Reinigungsarbeiten.

Um diese Probleme zu vermeiden sind Schieberventile der eingangs genannten Art entwickelt worden.

Das Ziel der vorliegenden Erfindung ist hingegen, ein selbstreinigendes Ventil der eingangs genannten Art so auszugestalten, dass keine zusätzliche Druckluftquelle erforderlich ist.

Erreicht wird dies dadurch, dass das Gehäuse mit seinem Durchbruch so ausgebildet ist, dass dieser eine Durchgangsöffnung des Schiebers in Offenstellung vollständig umgibt, dass der Antrieb des Schiebers und das Gehäuse über ein 5/2-Wege-Ventil mit der Druckluft versorgt werden, und dass der Luftüberdruck aus dem Zylinder des Antriebskolbens hergeleitet wird.

Bei dem Schieberventil gemäß der Erfindung wird der Luftüberdruck nicht separat angelegt, sondern aus dem Zylinder des Antriebskolbens hergeleitet, der über ein 5/2-Wege-Ventil angesteuert wird.

Im Zusammenhang mit einem bekannten nicht selbstreinigenden Ventil, ist es bekannt (DE/A/41 27 240) zur Betätigung des Schiebers ein 5/2-Wege-Ventil einzusetzen.

Die Erfindung wird nachstehend anhand der Zeichnungen beispielsweise erläutert.

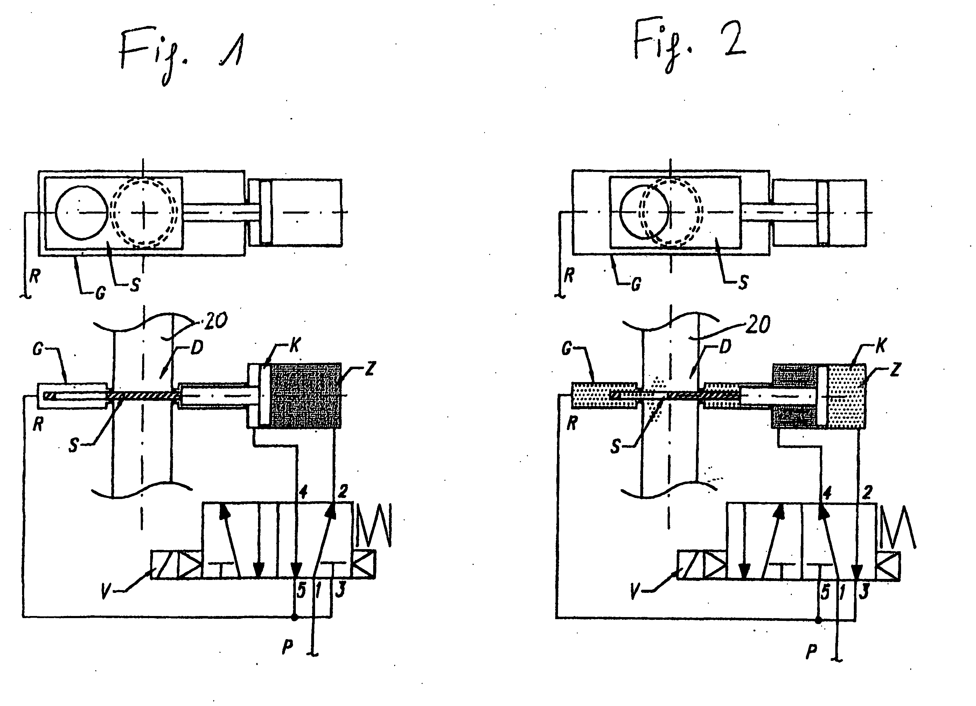

Die Figuren 1 bis 4 zeigen das Gehäuse des Schieberventils zusammen mit der zugehörigen Schaltung in verschiedenen Positionen.

In den Figuren ist im oberen Bereich eine Draufsicht auf das Gehäuse des Schieberventils mit dem zugehörigen Antrieb gezeigt, während darunter die zugehörige Ansteuerung zu erkennen ist.

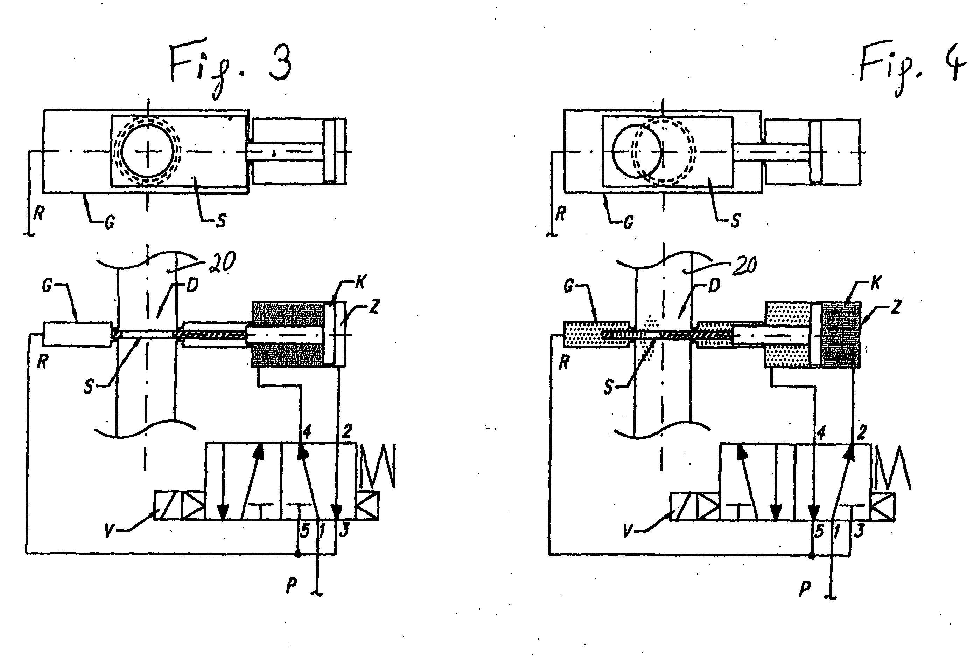

In den Figuren ist ein im Wesentlichen flaches quaderförmiges Gehäuse G gezeigt, in dessen Innerem ein Schieber S mit einer Durchgangsöffnung hin- und herbewegbar angeordnet ist. Das Gehäuse G ist etwas größer als der Schieber S ausgebildet, so dass dieser zwei Endpositionen einnehmen kann, nämlich einmal die geschlossene Lage in Fig. 1 und zum anderen die offene Lage in Fig. 3. Die Durchgangsöffnung des Schiebers S befindet sich in der Offenstellung im Inneren eines Rohres 20. Das Rohr 20 hat einen Durchgang D. In entsprechender Weise ist das quaderförmige Gehäuse G mit einem Durchbruch versehen, dieser Durchbruch fluchtet mit der Leitung 20 und auch mit der Durchgangsöffnung, wenn der Schieber S in der in Fig. 3 gezeigten Lage, der Offenstellung, angeordnet ist.

Der Schieber S ist am rechtsseitigen Ende mit einer Kolben-Zylinder-Anordnung verbunden. Es handelt sich hierbei um einen Zylinder Z in dessen Innerem ein Kolben K hin- und herbewegt werden kann, je nachdem an welcher Seite er mit Druckluft versorgt wird. Die Druckluftversorgung ist schematisch durch den Buchstaben P dargestellt worden, wobei Druckluft an den Anschluss 1 eines 5/2-Wege-Ventils V angelegt wird.

Der Anschluss 2 des Ventils V ist mit dem Raum rechtsseitig vom Kolben K des Zylinders Z verbunden. Die Seite links vom Kolben K des Zylinders Z ist mit dem Anschluss 4 des V-Ventils verbunden. Die Anschlüsse 5 und 3 des V-Ventils sind miteinander verbunden und stehen mit dem Gehäuse G über eine Leitung R in Verbindung.

In der Fig. 1 ist die geschlossene Stellung gezeigt. Oberhalb oder unterhalb des Schiebers S ist eine Flüssigkeit oder dergl. vorhanden. In jedem Fall ist damit zu rechnen, dass sich am Schieber S Verunreinigungen ansammeln, die bei einer Betätigung des Schiebers S durchaus in das Gehäuse G hineingelangen könnten.

Um den Schieber S in die Offenlegungsstellung zu bringen, muss das V-Ventil in die in Fig. 2 gezeigte Lage gebracht werden, d. h. der Druck P wird auf der linken Seite des Kolbens K im Gehäuse Z angelegt. Das sich im Raum rechts vom Kolben K befindliche Druckmittel gelangt nunmehr an die Anschlüsse 2 und 3 des V-Ventils und von daher schließlich über die Leitung 3 in den Innenraum des Gehäuses G. Das Druckmittel kann nun in den Bereich austreten, der den Schieber umgibt, und dies ist in Fig. 2 durch eine Reihe von Punkten wiedergegeben worden. Auf Grund des Überdrucks im Gehäuse G können Verunreinigungen nicht in das Innere des Gehäuses hineingelangen.

Die erreichte Endstellung ist in Fig. 3 gezeigt, sie lässt erkennen, dass der Kolben K seine rechtsseitige Endlage erreicht hat und nunmehr der Durchgang D über die Durchgangsöffnung des Schiebers S geöffnet ist.

Soll der Schieber S in die Schließstellung zurückgefahren werden, so wird, wie dies in Fig. 4 gezeigt ist, Druckmittel in den Raum rechts vom Kolben K des Zylinders Z eingeleitet und über die Verbindungen 4 und 5 wird das Gehäuse G über die Leitung R wiederum unter Druck gesetzt, so dass das Druckmittel aus dem Gehäuse G heraus in den Durchgang D der Leitung 20 übertreten kann.

In beiden Fällen ist das Endresultat, dass in gar keinem Falle Verunreinigungen, die am Schieber S an dessen Öffnung sich angesammelt haben, in das Gehäuse G hineingelangen können, vielmehr werden sie in die Leitung 20 abgegeben und können abgeführt werden.

## Patentansprüche

1. Schieberventil für eine Rohrleitung für den Durchgang von Flüssigkeit, Schlamm oder Fäkalien, aufweisend ein Gehäuse (G) mit einem Durchbruch für die Flüssigkeit, den Schlamm oder die Fäkalien, eine druckluftbetätigte Kolben-Zylinder-Anordnung für den gesteuerten Antrieb des Schiebers zwischen einer geöffneten und einer geschlossenen Lage zwecks Öffnung bzw. Sperrung des Durchgangs (D) der Rohrleitung, wobei der Schieber (S) in dem ihn umgebenden Gehäuse (G) bewegbar geführt ist; und das Gehäuse (G) über eine Leitung (R) derart mit Druckluft (P) versorgt werden kann, dass bei Arbeitsbewegungen des Schiebers (S) das Gehäuse (G) unter Luftüberdruck steht, um den Übergang von Verunreinigungen aus dem Durchgang (D) der Rohrleitung in das Gehäuse zu verhindern, **dadurch gekennzeichnet, dass** das Gehäuse (G) mit seinem Durchbruch so ausgebildet ist, dass dieser eine Durchgangsöffnung (D) des Schiebers (S) in Offenstellung vollständig umgibt, dass der Antrieb des Schiebers (K) und das Gehäuse (G) über ein 5/2-Wege-Ventil mit der Druckluft (P) versorgt werden, und dass der Luftüberdruck aus dem Zylinder (Z) des Antriebskolbens (K) hergeleitet wird.

## Claims

1. Slide valve for a pipe for the passage of liquid, sludge and faecal matter, comprising a body (G) with an opening for the liquid, the sludge or the faecal matter, a pneumatically operated piston cylinder arrangement for the controlled actuation of the slide between an opened and a closed position in order to open or block the passage (D) of the pipe, wherein said slide (S) is movably guided in the body (G) surrounding it; and the body (G) can be supplied with compressed air (P) through a line (R) such that the body (G) is under excess air pressure during operational movements of the slide (S) in order to prevent the transfer of contaminants from the passage (D) of the pipe into the body, **characterised in that** the body (G) is formed with its opening such that it completely surrounds the passage opening (D) of the slide (S) in the open position, that the drive (K) of the slide and the body (G) are supplied with the compressed air through a 5/2-way valve, and that the excess air pressure is derived from the cylinder (Z) of the drive piston (K).

## Revendications

1. Vanne à tiroir pour tuyaux destinés au passage de liquides, de boues ou de matières fécales, qui comprend une cage (G) avec un orifice pour les liquides, les boues ou les matières fécales, un ensemble de pistons cylindriques avec commande à air comprimé pour commander le déplacement du tiroir entre une position ouverte et une position fermée correspondant à l'ouverture ou la fermeture d'un passage (D) du tuyau, le tiroir (S) étant déplaçable dans la cage (G) dans laquelle il est logé, étant observé que la cage (G) peut être alimentée en air comprimé (P) par un conduit (R) de sorte qu'elle se trouve en état de surpression lors des mouvements du tiroir (S) afin d'empêcher que des salissures ne puissent pénétrer dans la cage à travers le passage (D) du tuyau, **caractérisée en ce que** la cage (G) avec son orifice est conçue pour que ledit orifice entoure complètement l'ouverture de passage (D) du tiroir lorsque celui-ci est en position ouverte, que la commande du tiroir (S) et la cage (G) sont alimentés en air comprimé (P) par un distributeur à quatre voies et que la surpression est amenée depuis le cylindre (Z) du piston de commande (K).
